# EUROPEAN PATENT APPLICATION

(11) **EP 2 723 127 A1**
(43) Date of publication of application: **23.04.2014**
(21) Application number: 12799928.2
(22) Date of filing: 08.06.2012
(51) Int. Cl.: H04W 52/18, H04W 72/04

(54) **MOBILE COMMUNICATIONS METHOD, MOBILE STATION AND WIRELESS BASE STATION**

(30) Priority: 15.06.2011 JP 2011133557
(71) Applicant: NTT DOCOMO, INC., Chiyoda-ku Tokyo 100-6150 (JP)
(72) Inventor: SAGAE, Yuta, Tokyo 100-6150 (JP); UMEDA, Hiromasa, Tokyo 100-6150 (JP); IWAMURA, Mikio, Tokyo 100-6150 (JP); UMESH, Anil, Tokyo 100-6150 (JP)
(74) Representative: HOFFMANN EITLE
(86) International application number: PCT/JP2012/064791
(87) International publication number: WO 2012/173057

(57) **Abstract**

To appropriately decrease the amount of interference with respect to an adjacent band appropriately using "A-MPR" and "NS". A mobile communication method according to the present invention includes a process A in which a mobile station UE notifies a radio base station eNB of "NS (network signaling value)" to which the mobile station UE corresponds, and a process B in which the radio base station eNB controls connection of the mobile station UE based on the notified "NS".

## Description

### Technical Field

The present invention relates to a mobile communication method, a mobile station, and a radio base station.

### Background Art

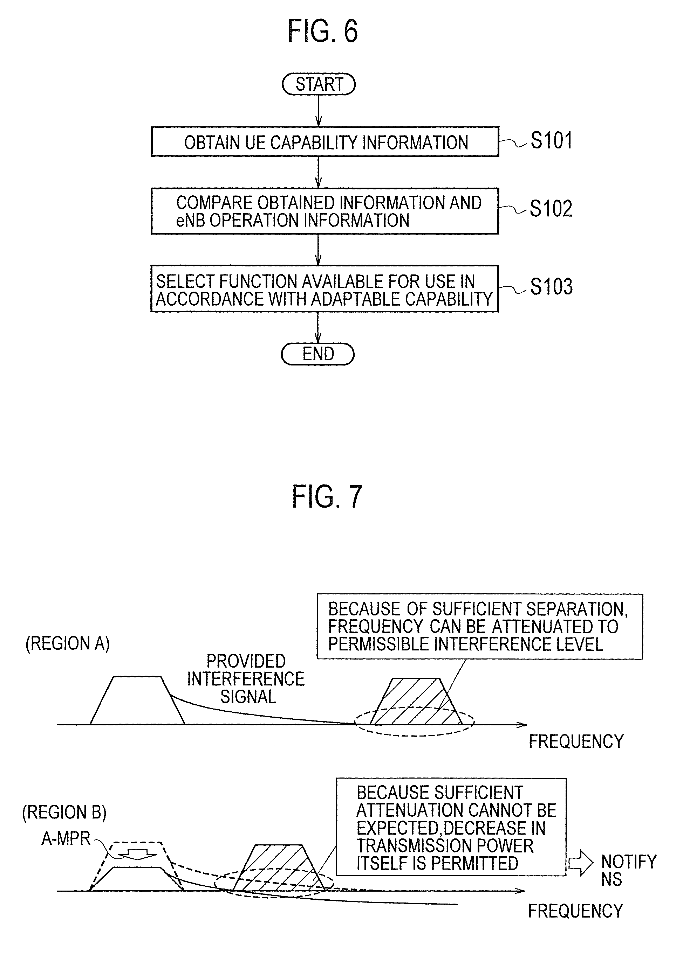

In a long term evolution (LTE) system, an "out of band radiation regulation (a regulation about the amount of leakage to an outside of an own band) " is provided so that the own system does not interfere with an adjacent band system used in the same region, as illustrated in Fig. 7 (see Non-Patent Literatures 1 and 2).

Typically, the regulation is stipulated in domestic legislation of each country, and a communication operator is required to use a communication system based on the regulation.

Meanwhile, a case is assumed in which sufficient attenuation cannot be obtained with respect to a permissible interference level to an adjacent region, depending on the use method of a band or a system type (for example, a region B in Fig. 7).

To handle such a case, in the LTE system, the regulation allows a decrease in transmission power of a mobile station UE.

Here, the amount of maximum decrease in permissible transmission power is defined as "additional-maximum power reduction (A-MPR)" (see Non-Patent Literature 1).

To be specific, as illustrated in Fig. 7, in the LTE system, a network (radio base station eNB) is configured to notify a mobile station UE of availability of the "A-MPR" for use by signaling called "network signaling (NS)" or "additionalSpectrumEmission" (see Non-Patent Literatures 1 and 3).

Note that a system of the network is configured to notify the mobile station UE of the "NS" not to exceed the permissible interference level in any circumstances (for example, at transmission of random access preamble) by broadcast information (system information block 2 (SIB2)) and the like.

Here, when a new system using a band adjacent to a band in an existing system is introduced into a specific region, new "A-MPR" is defined and "NS" is added to the existing system when sufficient attenuation cannot be expected in the band in the new system. At the addition, the following actions are necessary.

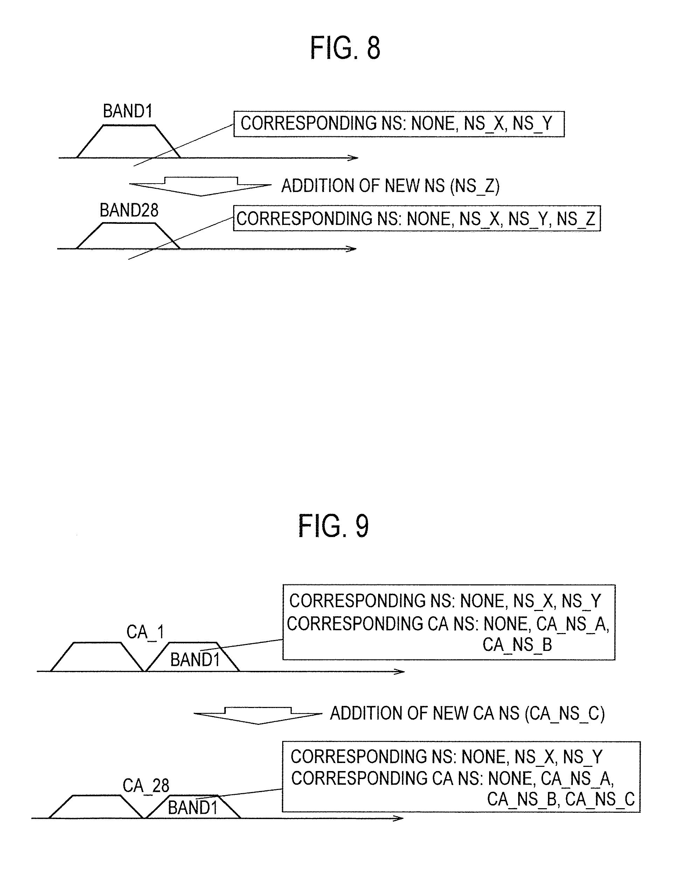

In such a case, as illustrated in Fig. 8, for example, it becomes necessary to newly use "NS_Z" in the existing system in which "NS_X" and "NS_Y" are available for use.

Here, assume that it is regulated that the "NS_X" and the "NS_Y" are used in a "Band 1", and the "NS_X", the "NS_Y", and the "NS_Z" are used in a "Band 28".

Here, the "Band 28" has equivalent regulation/performance quality to the "Band 1" but is the only one "Band" in which new "A-MPR" and "NS (NS_Z)" are defined.

In such a case, the mobile station UE that has passed a test of the "Band 1" can correspond to the "NS_X" and the "NS_Y", but cannot correspond to the "NS_Z" unless the mobile station UE passes a test of the "Band 28".

Meanwhile, the mobile station UE that corresponds to the "Band 28" also cannot use the both "Bands" unless it clears the test of the "Band 1", and can be connected only to a network of the "Band 28", which is one of the both "Bands".

### Citation List

### Non-Patent Literature

Non-Patent Literature 1: 3GPP TS36.101
Non-Patent Literature 2: 3GPP TS36.104
Non-Patent Literature 3: 3GPP TS36.331

### Summary of Invention

### Technical Problem

However, in an LTE-Advanced system that is a succeeding system of the LTE system, the mobile station UE can perform carrier aggrigation (CA) communication, that is, can simultaneously communicate with a plurality of cells using a plurality of component carriers (CCs).

Typically, two types of CA communication are considered: "Intra-band CA" that uses a plurality of bands in the same region, and "Inter-band CA" that uses different bands. In any case, a combination thereof is defined as a "CA Band Combination".

Here, in the LTE-Advanced system, a case in which the "A-MPR" becomes necessary in the CA communication will be considered.

The "NS" in this case is described as "CA_NS" for convenience. Note that the "CA_NS" is regulated for each "CA Band Combination", and the "A-MPR" and the "NS" may be defined in an "LTE band" included in the "CA Band Combination".

For example, as illustrated in Fig. 9, assume that it is regulated that "CA_NS_A" and "CA_NS_B" are used in a "CA_1 (CA Band Combination 1)", and the "CA_NS_A", the "CA_NS_B", and "CA_NS_C" are used in a "CA_28 (CA Band Combination 28)".

Here, the "CA_28" holds an equivalent regulation to the "CA_1" but new "A-MPR" and "NS" are added to the "CA_28".

In such a case, the mobile station UE that has passed a test of the "CA_1" can correspond to the "CA_NS_A" and the "CA_NS_B" but cannot correspond to the "CA_NS_C" unless it passes a test of the "CA_28".

Further, the mobile station UE that has passed the test of the "CA_28" cannot be connected to a network as the "CA_1" unless it passes the test of the "CA_1".

Here, the LTE-Advanced system is configured such that, after the mobile station UE is connected to the radio base station eNB in an LTE (Release-8) system, the radio base station eNB sets a function to perform CA communication to be used in the mobile station UE using radio resource control (RRC).

However, the mobile station UE includes a means of notifying the radio base station eNB of a corresponding "CA Band Combination", but does not include a means of notifying corresponding "NS".

Therefore, in a case where necessary "NS" is the "CA_NS_A" and the radio base station eNB corresponds only to the "CA_1" in the example of Fig. 9, the mobile station UE that corresponds to the "CA_28" cannot be connected to the network.

Therefore, the present invention has been made in view of the above-described problems and an objective is to provide a mobile communication method, a mobile station, and a radio base station appropriately decreasing the amount of interference with respect to an adjacent band appropriately using "A-MPR" and "NS".

A first characteristic of the present invention is a mobile communication method, which includes: a process A of notifying, by a mobile station, a radio base station of a network signaling value to which the mobile station corresponds; and a process B of controlling, by the radio base station, connection of the mobile station based on the notified network signaling value, and in which the network signaling value is information identifying a value that is to be possibly decreased from a rated power, in relation of a maximum transmission power in a predetermined channel of an uplink.

A second characteristic of the present invention is a mobile station, which includes: a transmission unit configured to notify a radio base station of a network signaling value to which the mobile station corresponds, in attach processing, and in which the network signaling value is information identifying a value that is to be possibly decreased from a rated power, in relation to a maximum transmission power in a predetermined channel of an uplink.

A third characteristic of the present invention is a radio base station, which includes: a reception unit configured to receive, from a mobile station, a network signaling value to which the mobile station corresponds; and a control unit configured to control connection of the mobile station based on the notified network signaling value, and in which the network signaling value is information identifying a value that is to be possibly decreased from a rated power, in relation to a maximum transmission power in a predetermined channel of an uplink.

### Brief Description of Drawings

Fig. 1 is an overall configuration diagram of a mobile communication system according to a first embodiment of the present invention.
Fig. 2 is a functional block diagram of a mobile station according to the first embodiment of the present invention.
Fig. 3 is a diagram illustrating an example of an information element "UE-EUTRA-Capability" included in "UE Capability Information" transmitted by the mobile station according to the first embodiment of the present invention.
Fig. 4 is a functional block diagram of a radio base station according to the first embodiment of the present invention.
Fig. 5 is a sequence diagram illustrating an operation of the mobile communication system according to the first embodiment of the present invention.
Fig. 6 is a flowchart illustrating an operation of the radio base station according to the first embodiment of the present invention.
Fig. 7 is a diagram for describing a problem of a conventional mobile communication system.
Fig. 8 is a diagram for describing a problem of a conventional mobile communication system.
Fig. 9 is a diagram for describing a problem of a conventional mobile communication system.

### Description of Embodiments

### (A mobile communication system according to a first embodiment of the present invention)

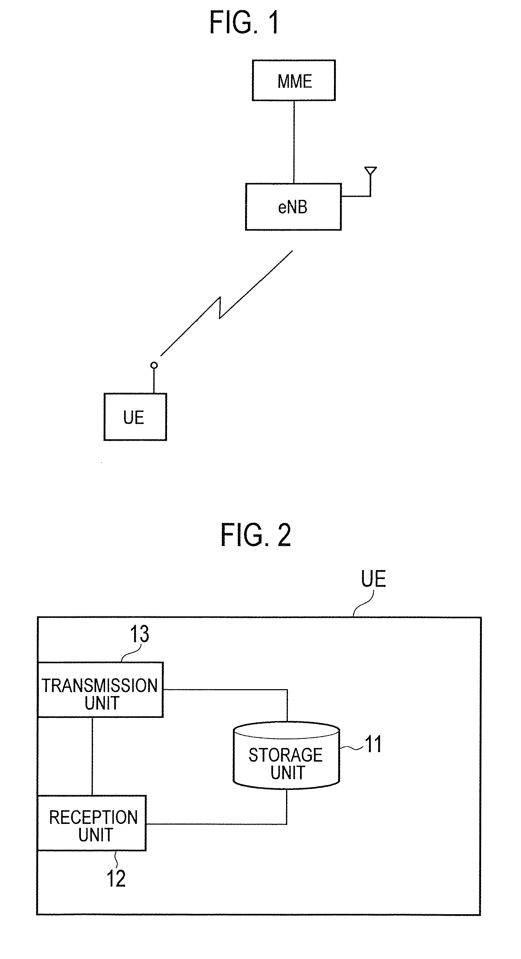

A mobile communication system according to a first embodiment of the present invention will be described with reference to Figs. 1 to 6. In all of the drawings for description of the present embodiment, ones having the same function are denoted with the same reference signs and repetitive description is omitted.

As illustrated in Fig. 1, a mobile communication system according to the present embodiment corresponds to the LTE-Advanced system, and includes a mobile management node MME (mobility management entity) and a radio base station eNB.

In the mobile communication system according to the present embodiment, an "orthogonal frequency division multiple access (OFDMA) system" is applied to a downlink and a "single carrier-frequency division multiple access (SC-FDMA) system" is applied to an uplink, as a radio access system.

A mobile station UE according to the present embodiment corresponds to the LTE system or to the LTE-Advanced system, and includes a storage unit 11, a reception unit 12, and a transmission unit 13, as illustrated in Fig. 2.

The storage unit 11 is configured to store a "Band (for example, a "Band 1", a "Band 28", or the like)" or a "CA Band Combination (for example, a "CA_1", a "CA_28", or the like)" to which the mobile station UE corresponds.

In other words, the storage unit 11 is configured to store "NS" to which the mobile station UE corresponds.

The reception unit 12 is configured to receive a signal transmitted from the radio base station eNB. For example, the reception unit 12 is configured to receive an RRC message or broadcast information transmitted from the radio base station eNB.

The transmission unit 13 is configured to transmit a signal to the radio base station eNB. For example, the transmission unit 13 is configured to transmit an RRC signal to the radio base station eNB.

For example, the transmission unit 13 is configured to determine a maximum transmission power of a predetermined channel in an uplink based on "maximum power reduction (MPR) " determined by a bandwidth (the number of resource blocks: the number of RBs) allocated by the radio base station eNB and "A-MPR" corresponding to NS assigned by the radio base station eNB.

Here, the transmission unit 13 may be configured to decrease the maximum transmission power in a predetermined channel of an uplink from a rated power regulated in the LTE system or in the LTE-Advance system by power corresponding to the "A-MPR" assigned by the "NS" included in an SIB2 transmitted from the radio base station eNB.

Note that the "NS" in the present embodiment is information that identifies a "value, in relation to the maximum transmission power in a predetermined channel of an uplink, which may be decreased from the rated power".

Here, when the "NS" has been notified by the SIB2, the mobile station UE first recognizes the notified "NS".

After recognizing the "NS", the mobile station UE determines an available maximum transmission power for use in corresponding to the "NS" where the "A-MPR" regulated in TS36.101 of 3GPP is the maximum value.

Note that, here, the "A-MPR" may be different depending on the number of RBs allocated by the radio base station eNB, similarly to the "MPR".

Therefore, when the mobile station UE can satisfy a performance regulation of spurious radiation regulated in 3GPP (or a performance regulation related to spectrum mask or a performance regulation related to adjacent channel interference), the mobile station UE do not need to decrease the maximum transmission power in a predetermined channel of an uplink, or may make a decreased amount of the maximum transmission power in a predetermined channel of an uplink from the rated power smaller than the power corresponding to the "A-MPR" assigned by the "NS".

In addition, the mobile station UE determines the "A-MPR" based on information of the notified "NS", the number of allocated RBs notified from the radio base station eNB, and frequency positions (resource block positions) thereof.

The mobile station UE determines a lower limit value Pcmax_L and an upper limit value Pcmax_H of the maximum transmission power, which may be used, based on the determined "A-MPR" according to the stipulation of Chapter 6.2.5 of TS36.101 of 3GPP, and determines a maximum transmission power Pcmax based on the out of band radiation regulation.

Further, the transmission unit 13 is configured to notify the radio base station eNB of "NS" to which the mobile station UE corresponds.

For example, the transmission unit 13 is configured to notify the radio base station eNB of the "NS" to which the mobile station UE corresponds in attach processing of the mobile station UE.

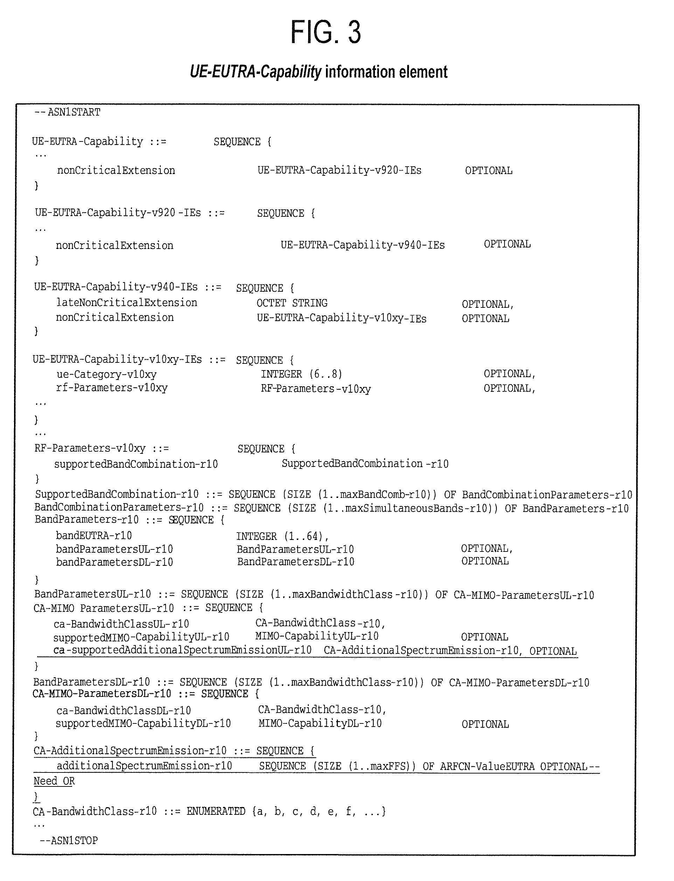

To be specific, the transmission unit 13 may be configured to notify the "NS" to which the mobile station UE corresponds according to an information element "UE-EUTRA-Cpability" included in "RRC: UE Capability Information", as illustrated in Fig. 3.

Further, the transmission unit 13 may be configured to notify the radio base station eNB of a maximum number of cells with which the mobile station UE can simultaneously communicate in addition to the "NS" to which the mobile station UE corresponds.

For example, the transmission unit 13 may be configured to notify the radio base station eNB of the maximum number of cells with which the mobile station UE can simultaneously communicate in addition to the "NS" to which the mobile station UE corresponds, in the attach processing of the mobile station UE.

To be specific, the transmission unit 13 may be configured to notify the maximum number of cells with which the mobile station UE can simultaneously communicate in addition to the "NS" to which the mobile station UE corresponds according to the information element "UE-EUTRA-Cpability" included in the "RRC: UE Capability Information", as illustrated in Fig. 3.

As illustrated in Fig. 3, the radio base station eNB according to the present embodiment includes a reception unit 21, a storage unit 22, a control unit 23, and a transmission unit 24.

The reception unit 21 is configured to receive a signal transmitted from the mobile station UE. For example, the reception unit 12 may be configured to receive an RRC message transmitted from the mobile station UE.

For example, the reception unit 21 is configured to obtain the "NS" to which the mobile station UE corresponds from the mobile station in the attach processing of the mobile station UE.

To be specific, as illustrated in Fig. 3, the reception unit 21 may be configured to obtain the "NS" to which the mobile station UE corresponds according to the information element "UE-EUTRA-Cpability" included in the "RRC: UE Capability Information".

Further, the reception unit 21 may be configured to obtain, from the mobile station, the maximum number of cells with which the mobile station UE can simultaneously communicate in addition to the "NS" to which the mobile station UE corresponds, in the attach processing of the mobile station UE.

To be specific, as illustrated in Fig. 3, the reception unit 21 may be configured to obtain the maximum number of cells with which the mobile station UE can simultaneously communicate in addition to the "NS" to which the mobile station UE corresponds according to the information element "UE-EUTRA-Cpability" included in the "RRC: UE Capability Information".

The storage unit 22 is configured to store the "NS" to which each mobile station UE corresponds.

Further, the storage unit 22 may be configured to store the maximum number of cells with which the mobile station UE can simultaneously communicate in addition to the "NS" to which each mobile station UE corresponds.

The control unit 23 is configured to control connection of each mobile station UE based on the "NS" to which each mobile station UE corresponds.

Further, the control unit 23 may be configured to control connection of each mobile station UE based on the maximum number of cells with which each mobile station UE can simultaneously communicate in addition to the "NS" to which each mobile station UE corresponds.

Here, the control unit 23 is configured to determine whether causing the mobile station UE connected in the LTE (Release-8) system to start CA communication.

For example, the control unit 23 may be configured to determine, in the radio base station eNB, whether causing the mobile station UE to start the CA communication based on a communication state, the "NS" to which the mobile station UE corresponds, the maximum number of cells with which the mobile station UE can simultaneously communicate, and the like.

In addition, the control unit 23 is configured, when having determined to cause the mobile station UE to start the CA communication, to determine a cell connectable in the CA communication of the mobile station UE.

Note that, the control unit 23 may be configured, in the radio base station eNB, not to actually set, to the mobile station UE, a function to perform the CA communication, using an RRC message even if the mobile station UE has selected the CA function as an available function for use, based on the communication state, the "NS" to which the mobile station UE corresponds, and the maximum number of cells with which the mobile station UE can simultaneously communicate.

The transmission unit 24 is configured to transmit a signal to the mobile station UE. For example, the transmission unit 24 is configured to transmit an RRC message to the mobile station UE.

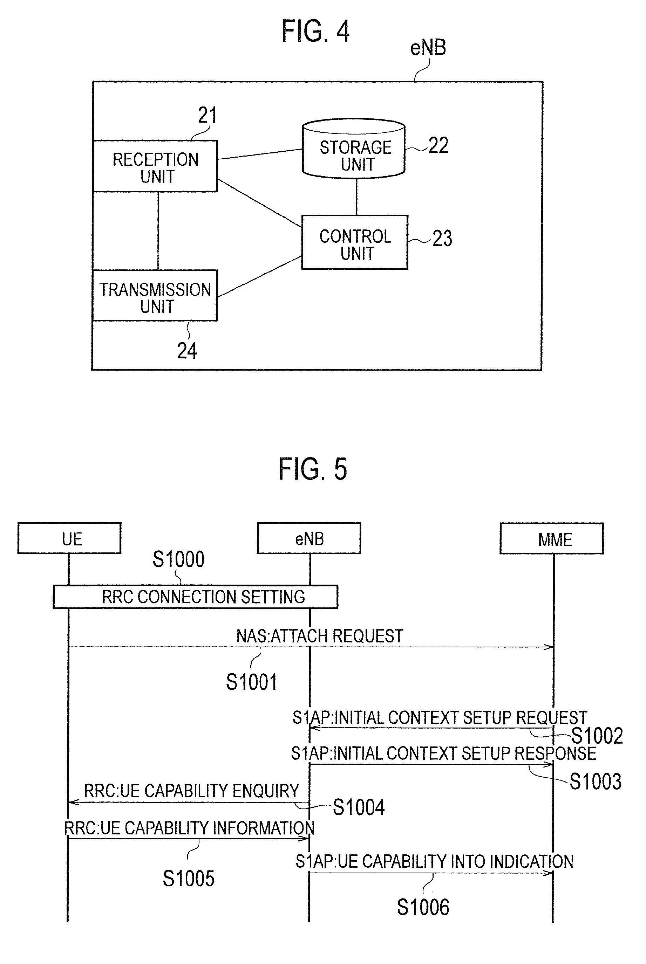

Hereinafter, an example of an operation of the mobile communication system according to the present embodiment will be described with reference to Figs. 5 and 6.

First, an operation in the attach processing of the mobile station UE in the mobile communication system according to the present embodiment will be described with reference to Fig. 5.

As illustrated in Fig. 5, in step S1000, the mobile station UE sets RRC connection between the mobile station UE and the radio base station eNB, and then transmits "NAS: Attach Request" to the mobile management node MME in step S1001.

In step S1002, the mobile management node MME transmits "S1AP: Initial Context Setup Request" to the radio base station eNB, and in step S1003, the radio base station eNB transmits "S1AP: Initial Context Setup Response" to the mobile management node MME.

In step S1004, the radio base station eNB transmits "RRC: UE Capability Enquiry" to the mobile station UE.

In step S1005, the mobile station UE transmits "RRC: UE Capability Information" to the radio base station eNB.

Here, as illustrated in Fig. 3, the mobile station UE transmits the "NS" to which the mobile station UE corresponds according to the information element "UE-EUTRA-Cpability" included in the "RRC: UE Capability Information".

Note that the mobile station UE may notify the maximum number of cells with which the mobile station UE can simultaneously communicate in addition to the "NS" to which the mobile station UE corresponds.

In step S1006, the radio base station eNB transmits "S1AP: UE Capability Info Indication" to the mobile management node MME.

Second, an example of an operation of the radio base station eNB when the mobile station UE starts communication in the mobile communication system according to the present embodiment will be described with reference to Fig. 6.

In step S101, the radio base station eNB obtains the "NS" to which the mobile station UE corresponds and the maximum number of cells with which the mobile station UE can simultaneously communicate.

Here, the radio base station eNB may obtain the "NS" to which the mobile station UE corresponds and the maximum number of cells with which the mobile station UE can simultaneously communicate in the attach processing of the mobile station UE.

Alternatively, after the mobile station UE is connected to the radio base station eNB in the LTE (Release-8) system, the radio base station eNB may obtain the "NS" to which the mobile station UE corresponds and the maximum number of cells with which the mobile station UE can simultaneously communicate.

In step S102, the radio base station eNB compares the obtained "NS" to which the mobile station UE corresponds, the maximum number of cells with which the mobile station UE can communicate, and operation information of the radio base station eNB, and determines a maximum number of cells available for use by the mobile station UE, and the like.

In step S103, the radio base station eNB selects a function available for use by the mobile station UE based on the maximum number of cells available for use by the mobile station UE, and the like.

For example, when having selected a function to perform the CA communication as the function available for use by the mobile station UE based on the maximum number of cells available for use by the mobile station UE, the radio base station eNB may determine to cause the mobile station UE to start the CA communication and set the function to perform the CA communication (for example, a connection cell, or the like) by an RRC message.

Note that whether setting the selected function depends on a function such as a scheduler or the like of the radio base station eNB. Therefore, the radio base station eNB may not set the selected function.

According to the mobile communication system of the first embodiment of the present invention, the radio base station eNB can obtain the "NS" to which each mobile station UE corresponds, and thus the radio base station eNB can appropriately control the transmission power in each mobile station UE, and can appropriately decrease in the amount of interference with respect to an adjacent band.

The above-described characteristics of the present embodiment may be described as follows.

A first characteristic of the present embodiment is a mobile communication method, which includes a process A in which a mobile station UE notifies a radio base station eNB of "NS (network signaling value)" to which the mobile station UE corresponds, and a process B in which the radio base station eNB controls connection of the mobile station UE based on the notified "NS", and in which the "NS" is information identifying a value that can be decreased from a rated power, in relation to a maximum transmission power in a predetermined channel of an uplink.

In the first characteristic of the present embodiment, in the process A, the mobile station UE may notify a maximum number of simultaneously communicatable cells in addition to the "NS", and in the process B, the radio base station eNB may select an available function for use by the mobile station UE based on the "NS" and the maximum number of cells.

A second characteristic of the present embodiment is a mobile station UE, which includes a transmission unit 13 configured to notify a radio base station eNB of "NS" to which the mobile station UE corresponds, in attach processing.

In the second characteristic of the present embodiment, the transmission unit 13 may be configured to notify a maximum number of simultaneously communicatable cells in addition to the "NS".

A third characteristic of the present embodiment is a radio base station eNB, which includes a reception unit 21 configured to receive, from a mobile station UE, "NS" to which the mobile station UE corresponds, and a control unit 23 configured to control connection of the mobile station UE based on the notified "NS".

In the third characteristic of the present embodiment, the reception unit 21 may be configured to receive a maximum number of simultaneously communicatable cells in addition to the "NS", and the control unit 23 may be configured to select an available function for use by the mobile station UE based on the "NS" and the maximum number of cells.

Note that the above-described operations of the radio base station eNB and the mobile station UE may be implemented by hardware, by a software module executed by a processor, or by a combination of the hardware and the software module.

The software module may be provided in a storage medium in an arbitrary format such as a random access memory (RAM), a flash memory, a read only memory (ROM), an erasable programmable ROM (EPROM), an electronically erasable and programmable ROM (EEPROM), a register, a hard disk, a removable disk, or a CD-ROM.

The storage medium is connected to the processor so that the processor can read/write information in the storage medium. In addition, the storage medium may be integrated in the processor. In addition, the storage medium and the processor may be provided in the ASIC. The ASIC may be provided in the radio base station eNB and the mobile station UE. In addition, the storage medium and the processor may be provided in the radio base station eNB and the mobile station UE, as discrete components.

While the present invention has been described in detail using the embodiments, it is apparent for a person skilled in the art that the present invention is not limited to the embodiments described in the present specification. The present invention can be implemented as a modification or an alternation without departing from the gist and scope of the present invention defined by the description of claims. Therefore, the description of the present specification is given for illustrative purposes only, and does not provide any restrictive meaning to the present invention.

Note that the entire contents of Japanese Patent Application No. 2011-133557 (filed on June 15, 2011) are incorporated in the specification of the present application by reference.

### Industrial Applicability

As described above, according to the present invention, a mobile communication method, a mobile station, and a radio base station capable of appropriately decreasing the amount of interference with respect to an adjacent band appropriately using "A-MPR" and "NS".

### Reference Signs List

- UE: Mobile station
- eNB: radio base station
- 11 and 22: Storage unit
- 12 and 21: Reception unit
- 13 and 24: Transmission unit
- 23: Control unit

## Claims

1. A mobile communication method comprising:
a process A of notifying, by a mobile station, a radio base station of a network signaling value to which the mobile station corresponds; and
a process B of controlling, by the radio base station, connection of the mobile station based on the notified network signaling value,
wherein the network signaling value is information identifying a value that is to be possibly decreased from a rated power, in relation of a maximum transmission power in a predetermined channel of an uplink.

2. The mobile communication method according to claim 1, wherein
in the process A, the mobile station notifies a maximum number of simultaneously communicatable cells in addition to the network signaling value, and
in the process B, the radio base station selects a function available for use by the mobile station based on the network signaling value and the maximum number of cells.

3. A mobile station comprising:
a transmission unit configured to notify a radio base station of a network signaling value to which the mobile station corresponds, in attach processing,
wherein the network signaling value is information identifying a value that is to be possibly decreased from a rated power, in relation to a maximum transmission power in a predetermined channel of an uplink.

4. The mobile station according to claim 3, wherein the transmission unit is configured to notify a maximum number of simultaneously communicatable cells in addition to the network signaling value.

5. A radio base station comprising:
a reception unit configured to receive, from a mobile station, a network signaling value to which the mobile station corresponds; and
a control unit configured to control connection of the mobile station based on the notified network signaling value,
wherein the network signaling value is information identifying a value that is to be possibly decreased from a rated power, in relation to a maximum transmission power in a predetermined channel of an uplink.

6. The radio base station according to claim 5, wherein
the reception unit is configured to receive a maximum number of simultaneously communicatable cells in addition to the network signaling value, and
the control unit is configured to select a function available for use by the mobile station based on the network signaling value and the maximum number of cells.
